(19) Europäisches Patentamt
European Patent Office
Office européen des brevets

(11) EP 1 395 042 A2

(12) EUROPEAN PATENT APPLICATION

(43) Date of publication:
**03.03.2004 Bulletin 2004/10**

(51) Int Cl.[7]: **H04N 1/60**

(21) Application number: **03255193.9**

(22) Date of filing: **21.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **29.08.2002 US 230422**

(71) Applicant: **Hewlett-Packard Development Company, L.P.**
**Houston, TX 77070 (US)**

(72) Inventor: **Vondran, Gary L.**
**San Carlos, CA 94070 (US)**

(74) Representative: **Jehan, Robert et al**
**Williams Powell**
**Morley House**
**26-30 Holborn Viaduct**
**London EC1A 2BP (GB)**

(54) **Method and apparatus for color space conversion**

(57) An input color space value (102) is converted to an output color space value (104) by determining (202) a most significant portion and a least significant portion associated with the input color space value (102). In addition, at least one node value is determined (204). Each node value is determined (204) at a respective counter *i* (122) from 0 to a maximum value associated with the least significant portion. Each node value is determined (204) to be substantially equal to: a lookup value associated with one plus the most significant portion for each counter i (122) is less than the least significant portion; and a lookup value associated with the most significant portion for each counter *i* (122) is greater than or equal to the least significant portion. Furthermore, the output color space value (104) is calculated (206) to be substantially equal to an average value for the at least one node value.

200
INPUT
DETERMINE MSP & LSP
202
DETERMINE NODE VALUE(S)
204
CALCULATE OUTPUT VALUE
206
OUTPUT

FIG. 2



Printed by Jouve, 75001 PARIS (FR)

## Description

The present invention relates to a colour space conversion.

When working with color data, it is a common desire to convert the data from one color space representation into another. For example, a display (e.g., cathode ray tube "CRT", liquid crystal display "LCD", etc.), image capturing devices (e.g., scanner, digital camera, etc.) and other devices may use the additive color space RGB (Red, Green, Blue) while printing devices typically use the subtractive color space CMY (Cyan, Magenta, Yellow). Other color spaces include CMYK (Cyan, Magenta, Yellow, and Black), CieLab, $YC_bC_r$, LUV, LHS, and others may be used in printing devices. In addition, printing devices may utilize more color dimensions (e.g., ink, dye, pigment, etc.) to improve image quality. For example, InkJet™ printers commonly use 6 inks (CMYK + C-lite, M-lite) to increase per pixel printable colors. To allow devices which use different color spaces to interact, a color space conversion process is generally utilized to convert the data from the color space of one device to the color space of another device.

Generally, converting one color space to another involves a complex, non-linear relationships. Therefore, color space conversion is not readily describable utilizing a mathematical formula. In addition, translations to expand the color gamut and correct for imperfections in the reading, displaying, and printing devices are also performed on the color data. By combining these conversions and translations into the color conversion process the number of computations may be reduced.

The most direct approach that satisfies these criteria is a lookup table ("LUT"). The advantages of aLUT are that it is simple and can be used for any translation. The drawback, however, is that these LUTs can be enormous. A conversion from a 24 bit RGB color space to a 24 bit CMY color space requires a 48 Mega Byte ("MB") LUT. A 48 MB LUT is clearly unreasonable for embedded systems or ASIC ("application specific integrated circuit) implementations with small on-chip memories making the direct table lookup approach unacceptable.

In order to reduce the size of the LUT, only a coarse lattice of points of the color space are stored. Using linear interpolation, values between these points are computed. In this approach, only values for every $2^n$ points are stored in each of the input dimensions. The term "dimension" may be used to describe a color dimension, subset, etc. of the color space. The last point of each dimension is also stored to allow for interpolation between the last point that is a multiple of $2^n$ and the final value in the color space. Using this approach, the LUT is $(2^{b-n}+1)d$ entries, given $d$ input dimensions each with $b$ input bits. The value $n$ should be chosen such that the behavior between lattice points is approximately linear. For example, given a 24 bit RGB input ($d=3$ and $b=8$) to be converted to 24 bit CMY with $n=4$, the resultant table size is a 14.4 Kilo Byte ("KB") LUT. If $n$ is chosen too high, the linear interpolation will not adequately approximate the translation. Choosing n to be too small results in a table that is larger than needed.

A number of substantially different linear interpolation schema have been utilized to address the problems associated with color space conversion. These approaches include cube subdivision, radial, tetrahedral, pyramidal, PRISM, trilinear, and pruned tetrahedral interpolation. A general discussion of these approaches may be found in U. S. Patent No. 6,049,400.

The present invention seeks to provide an improved color space conversion.

According to an aspect of the present invention there is provided a method of converting an input color space value as specified in claim 1, 2 or 3.

According to another aspect of the present invention there is provided an apparatus for converting an input color space value as specified in claim 6, 7, 8 or 9.

In accordance with an embodiment, there is provided a method of converting an input color space value to an output color space value. In this method, a most significant portion and a least significant portion associated with the input color space value is determined. In addition, at least one node value is determined. Each note value is determined at a respective counter $I$ from 0 to a maximum value associated with the least significant portion. Each node value is determined to be substantially equal to: a lookup value associated with one plus the most significant portion for each counter $I$ is less than the least significant portion; and a lookup value associated with the most significant portion for each counter $I$ is greater than or equal to the least significant portion. Furthermore, in this method, the output color space value is calculated to be substantially equal to an average value for the at least one node value.

Preferably said input color space includes a plurality of color dimensions and said method includes determining a respective most significant portion and least significant portion for each of said plurality of color dimensions.

A resolution of said output color space value may be modified by modifying said counter i to step by a value greater than 1. Preferably, said input color space includes 3 color dimensions and said output color space includes 4 color dimensions. Said input color space may include RGB and said output color space includes CMYK.

Advantageously the numeral system is binary and said output color space value with an equation:

$$x = \frac{\sum_{i=0}^{2^n-1} P[a_u + (a_l > i)]}{2^n}$$

wherein $n$ is a quantity of bits associated with $a_l$.

The method may include the steps of calculating at least one output color space value based on at least one input value with an equation:

$$(x, y, z, \ldots) = \frac{\sum_{i=0}^{2^n-1} P[a_u + (a_l > i)][b_u + (b_l > i)][c_u + (c_l > i)]}{2^n} \ldots$$

wherein:

one or more of *a, b, c*, and... are said at least one input color space value;
one or more of $a_u$, $b_u$, $c_u$, and... are at least one upper portion of said at least one input color space value;
one or more of $a_l$, $b_l$, $c_l$, and... are at least one lower portion of said at least one input color space value;
$n$ is a quantity of bits associated with one or more $a_l$, $b_l$, $c_l$, and...;
$P[au+(a_l>i)][b_u+(b_l>i)][c_u+(c_l>i)]\ldots$ is a lookup value of:
$[a_u + (a_l > i)][b_u + (b_l > i)][c_u + (c_l > i)]\ldots$; *and*
one or more of *x*, *y*, *z,* and... are said at least one output color space value.

The apparatus may include one or more of:

(a) means for determining a respective most significant portion and least significant portion for each of said plurality of color dimensions,
(b) means for modifying a resolution of said output color space value by modifying said counter *i* to step by a value greater than 1;
(c) means for storing a lookup table, said lookup table including a plurality of node values; and
(d) at least one of means for printing, means for displaying, and means for image capture.

The invention also provides apparatus for converting an input color space value to an output color space value, said apparatus comprising:

means for calculating said output color space value based on said input color space value with an equation:

$$x = \text{AVE}(P[a_u + (a_l > i)]) \quad \text{for } i = 0 \text{ to } k^n - 1$$

wherein:

$a$ is said input color space value;
$a_u$ is an upper portion of said input color space value;
$a_l$ is a lower portion of said input color space value;
$k$ is a base unit of a numeral system;
$n$ is a quantity of positions associated with $a_l$;
$(a_l > i)$ is a function returning a value of 1 if true and 0 if false;
$P[a_u+(a_l>i)]$ is a lookup value of $[a_u+(a_l>i)]$; and
$x$ is said output color space value.

The apparatus may comprise means for storing a plurality of lookup values and/or at least one of means for printing, means for displaying, and means for image capture.

The invention also provides a computer readable medium on which is embedded computer software, said software comprising executable code for performing a method of converting an input color space value to an output color space value, said method comprising:

calculating said output color space value based on said input color space value with an equation:

$$x = \mathrm{AVE}(P[a_u + (a_l > i)]) \text{ for } i = 0 \text{ to } k^n\text{-}1$$

wherein:

$a$ is said input color space value;
$a_u$ is an upper portion of said input color space value;
$a_l$ is a lower portion of said input color space value;
$k$ is a base unit of a numeral system;
$n$ is a quantity of positions associated with $a_l$;
$(a_l > i)$ is a function returning a value of 1 if true and 0 if false;
$P[a_u+(a_l>i)]$ is a lookup value of $[a_u+(a_l>i)]$; and
$x$ is said output color space value.

Preferably, wherein said numeral system is binary and said output color space value is calculated based on said input color space value with an equation:

$$x = \frac{\sum_{i=0}^{2^n-1} P[a_u + (a_l > i)]}{2^n}$$

wherein:

$n$ is a quantity of bits associated with $a_l$.

The computer readable medium may include means for calculating at least one output color space value based on at least one input value with an equation:

$$(x, y, z, \ldots) = \frac{\sum_{i=0}^{2^n-1} P[a_u + (a_l > i)][b_u + (b_l > i)][c_u + (c_l > i)]}{2^n} \ldots$$

wherein:

one or more of $a$, $b$, $c$, and ... are said at least one input color space value;
one or more of $a_u$, $b_u$, $c_u$, and ... are at least one upper portion of said at least one input color space value;
one or more of $a_l$, $b_l$, $c_l$, and ... are at least one lower portion of said at least one input color space value;
n is a quantity of bits associated with one or more of $a_l$, $b_l$, $c_l$, and ...;
$P[a_u+(a_l>i)][b_u+(b_l>i)][c_u+(c_l>i)]\ldots$ is a lookup value of:
$[a_u+(a_l>i)][b_u+(b_l>i)][c_u+(c_l>i)]\ldots$; and
one or more of $x$, $y$, $z$, and ... are said at least one output color space value.

The invention also provides a system for converting an input color space value to an output color space value, said system comprising:

a processor configured to:

determining a most significant portion and a least significant portion associated with said input color space value;
determining at least one node value, each node value being determined at a respective counter *i* from 0 to a maximum value associated with said least significant portion, wherein each node value is substantially equal to:

a lookup value associated with one plus said most significant portion for each counter *i* being less than said least significant portion; and
a lookup value associated with said most significant portion for each counter *i* being greater than or equal to said least significant portion; and

calculating said output color space value being substantially equal to an average value for said at least one node value; and

a lookup table configured for connection to said processor.

The system preferably includes at least one of a printer, a monitor, a scanner, and a digital camera.

Preferably, the processor is further configured to determine a respective most significant portion and least significant portion for each of a plurality of color dimensions.

Advantageously, the processor is configured to modify a resolution of said output color space value by modifying said counter *i* to step by a value greater than 1.

The apparatus may include a lookup table, said lookup table including an indexed list of entries, each entry including a query value and a corresponding node value, each query value being associated with a most significant portion, said lookup table being functionally attached to said node determination unit, wherein said node determination unit is configured to receive a corresponding node value in response to querying said lookup table.

The MSP/LSP extraction unit is preferably configured to determine a respective most significant portion and a respective least significant portion from each of a plurality of color dimensions associated with said input color space.

Embodiments of the present invention are described below, by way of example only, with reference to the drawings, in which:

Figure 1A is a block diagram of an interpolator according to an embodiment of the invention;
Figure 1B is a block diagram of a component of the interpolator according to an embodiment of the invention;
Figure 1C is a block diagram of a system according to an embodiment of the invention;
Figure 2 is a flow diagram of a method according to an embodiment of the invention;
Figure 3 is a block diagram of a system according to another embodiment of the invention; and
Figure 4 is a flow diagram of a method according to another embodiment of the invention.

For simplicity and illustrative purposes, in the following description, numerous specific details are set forth in order to provide a thorough understanding of the preferred embodiments. It will be apparent however, to one or ordinary skill in the art, that the invention may be practiced without limitation to these specific details. In other instances, well known methods and structures have not been described in detail so as not unnecessarily obscure the teachings herein.

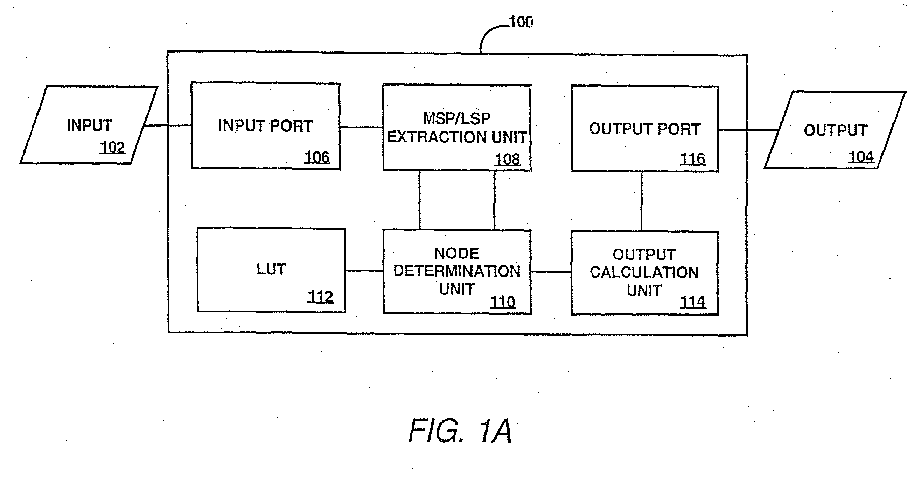

In the following description of Figures 1A - 1C, a variety of embodiments are presented. In a relatively simply embodiment, an input value having a plurality of positions (e.g., binary bits, decimal digits, hexadecimal numbers, etc.) is converted to an output value. The output value may include one or more positions. The input value may include a "most significant portion" ("MSP") and a "least significant portion" ("LSP"). The term MSP is used to describe one or more positions of the input value having a relatively greater weight as compared to the LSP. Stated in another manner, the MSP is comprised of one or more left-most positions and the LSP is comprised of any positions remaining after the removal of the MSP (e.g., one or more right-most positions). For example, given an input value equal to "1234", the MSP may be "12" and the LSP may be "34".

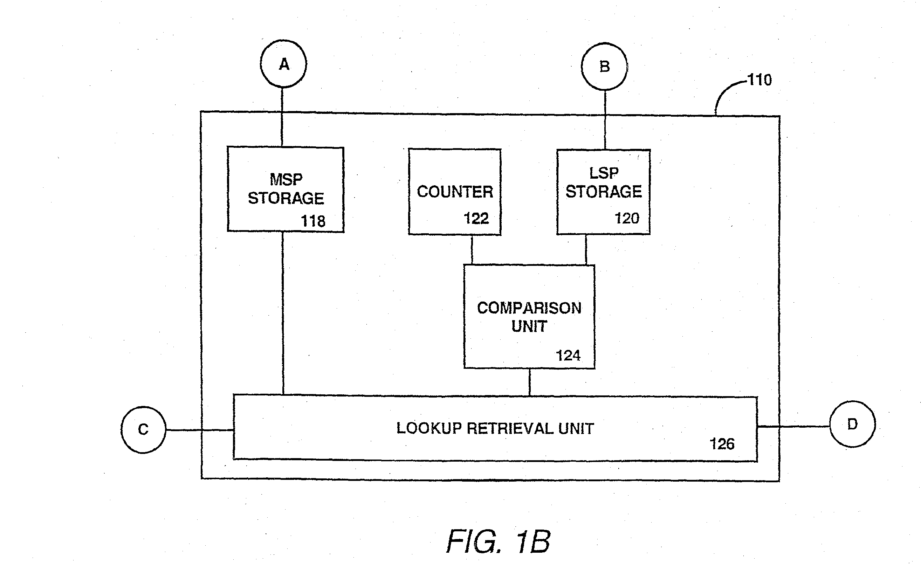

Figure 1A is a block diagram of an interpolator 100 according to an embodiment of the invention. The interpolator 100 is configured to convert an input color space value 102 of a first color space to an output color space value 104 of a second color space. In this regard, the interpolator 100 may include an input port 106 configured to receive the input color space value 102 and forward the input color space value 102 to an MSP/LSP extraction unit 108. The MSP/LSP extraction unit 108 is configured to determine the MSP and the LSP for the input color space value 102 and forward the MSP and the LSP to a node determination unit 110. As shown in figure 1B, the node determination unit 110 is configured to utilize the MSP and/or the LSP to determine a value of at least one node. A node is basically a limit (e.g., boundary point, etc.). In one embodiment, a node based solely on the MSP is typically determined. This node is termed a [0] node. The value of the [0] node ("P[0]") is generally determined by utilizing a lookup table ("LUT").

Specifically, in an embodiment of the invention, the node determination unit 110 may be configured to retrieve node values from a LUT 112. The LUT 112 may include an indexed list of entries. Each entry may include a query value and an answer value. Each query value may correspond to a particular MSP. Each answer value may correspond to the respective output value (e.g., node value) associated with the particular MSP. In general, the percentage of total possible input values actually used to construct the LUT 112 can be based on one or more of the following factors: how large the LUT 112 may reasonably be; interpolation calculation time; linearity of solution between nodes; system application; optimization of the system; and the like. If only the [0] node is determined, the output color space value 104 may be found at that node and is thus, equal to the P[0]. If two nodes are determined, the second node is termed a [1] node and the output color space value 104 may be found along a line between the P[0] and the P[1].

To continue the above example, given a four digit input color space value 102 with an MSP equal to 12, it may be inferred that a lower limit for the input color space value 102 is 1200 and that an upper limit for the input color space value 102 is 1299. In this regard, the output color space value 104 may be found between a lookup value (e.g., node value) for 12 (inclusive) and a lookup value for 13 (exclusive). Thus, in this example, the [0] node is equal to 12 and the [1] node is equal to 13. Once again however, the [1] node may not be required to determine the output color space value 104. In this regard, the number of nodes determined is dependent upon the value of the LSP. If the LSP has a value of essentially zero, the LSP does not contribute to the conversion of the input color space value 102 to the output color space value 104. Thus, one node (e.g., the [0] node) will be determined based on the value of the MSP. However, if the LSP has a value of greater than zero, then the [1] node will be determined and the P[1] will contribute to the output color space value 104. Furthermore, the greater the LSP, the greater the P[1] will influence (e.g., weight, impact, etc.) the output color space value 104.

The node determination unit 110 is further configured to forward the determined nodes to an output calculation unit 114. The output calculation unit 114 is configured to receive the determined nodes and calculate the output color space value 104. For example, the output calculation unit 114 may be configured to calculate an average node value. The average node value may, essentially, be the output color space value 104. In addition, the output calculation unit 114 may be configured to forward the output color space value to an output port 116. The output port 116 may be configured to receive and forward the output color space value 104.

Figure 1B is a block diagram of node determination unit 110 according to an embodiment of the invention depicted in figure 1A. Accordingly, the description of figure 1B will be made with particular reference to those features discussed in figure 1A. The node determination unit 110 may include an MSP storage unit 118, LSP storage unit 120, counter 122, comparison unit 124, and lookup retrieval unit 126. The MSP storage unit 118, as illustrated by circle A, may be configured to communicate with the MSP/LSP extraction unit 108 and, in this manner, may receive the MSP from the MSP/LSP extraction unit 108. The MSP storage unit 118 may further be configured to forward the MSP to the lookup retrieval unit 126. The LSP storage unit 120, as illustrated by circle B, may be configured to communicate with the MSP/LSP extraction unit 108 and, in this manner, may receive the LSP from the MSP/LSP extraction unit 108. The LSP storage unit 120 may further be configured to forward the LSP to the comparison unit 124.

The node determination unit 110 is configured to determine a relative weight for each node value determined. In general, the value of the LSP is compared to a number of distinct LSP values ("nLSP"). To continue the example in figure 1A, if the LSP may be any whole number from 00 to 99, then the nLSP is equal to 100 because there are 100 distinct whole number from 00 to 99. In this regard, according to an embodiment of the invention, the counter 122 may be configured to set the value of a counter variable *i* ("counter *i*") from 0 to nLSP-1 and, at each value of *i*, forward *i* to the comparison unit 124.

The comparison unit 124 may be configured to receive the counter *i* from the counter 122 and the LSP from the LSP storage unit 120. The comparison unit 124 may further be configured to compare these two values. If the comparison unit 124 determines that the LSP is greater than the counter *i*, the comparison unit 124 may be configured to forward a value of 1 to the lookup retrieval unit 126. If the comparison unit 124 determines that the LSP is less than or equal to the counter *i*, the comparison unit 124 may be configured to forward a value of 0 to the lookup retrieval unit 126.

The lookup retrieval unit 126 may be configured to receive the MSP from the MSP storage unit 118 and the value forwarded by the comparison unit 124. In addition, as illustrated by circle C, the lookup retrieval unit 126 may be configured for two way communication with the LUT 112. In this regard, the lookup retrieval unit 126 may further be configured to add these two values, forward the resulting value to the LUT 112, and retrieve a node value (e.g., a lookup value) from the LUT 112. Moreover, the lookup retrieval unit 126, as illustrated by circle D, may be configured to communicate with the output calculation unit 114 and, in this manner, forward the retrieved node value to the output calculation unit 114.

It should be noted that, while in the above descriptions of figures 1A and 1B, the interpolator 100 includes separate components configured to perform distinct operations, it is known within the art to combine operations. Thus, these components may be subsumed within one or a few components and any such variation are within the scope of the claims In this regard, the above discussion is a specific example of an embodiment of the invention and was presented for illustrative purposes only.

More generally, various other embodiments of the invention may utilize the observation that the closer the LSP is to the nLSP, the greater the influence the P[1] has on the output color space value 104. Thus, by comparing the LSP to each value of the counter *i*, and computing an average value for the node values returned as a result of the comparison, the output color space value 104 may be determined. Stated in another manner, the output color space value 104 is equal to the average of the P[0] multiplied by one minus the ratio LSP to nLSP, and the P[1] multiplied by the LSP to nLSP ratio. From this, it is easily shown that if the LSP is equal to zero, the P[1] multiplied by the LSP to nLSP ratio cancels out and thus, the output color space value 104 is equal to P[0]. Alternatively, if the LSP is equal to a maximum LSP value ("maxLSP") (e.g., one less than the nLSP), the nLSP minus the maxLSP is equal to 1 and the output color space value 104 is relatively close to being equal to the P[1]. Intuitively, this makes sense because the output color space value 104 should not be equal to P[1] unless the MSP is incremented by 1.

It should be noted that while multiplication operations are mentioned above, the invention is not limited to the use of multiplication operations. In fact, as multiplication operations are generally more costly both in terms of processor cycles and chip area for an ASIC implementation, it may be advantageous to substitute any or all of the multiplication operations with an appropriate number of addition operations. In addition, while a variety of equations may be utilized to derive the output color space value 104 based on the input color space value 102, according to an embodiment of the invention, the following equation may be used for interpolating along one axis (e.g., for an input color space value having a single dimension):

$$x = \mathrm{AVE}(P[a_u + (a_l > i)] \text{ for } i = 0 \text{ to } k^n - 1 \qquad \text{eqn. 1}$$

where: $a$ is the input color space value 102; $a_u$ is an upper portion of the input color space value 102; $a_l$ is a lower portion of the input color space value 102; $k$ is a base unit of a numeral system; $n$ is a quantity of positions associated with $a_l$; $(a_l>i)$ is a function returning a value of 1 if true and 0 if false; $P[a_u+(a_l>i)]$ is a lookup value of $[a_u+(a_l>i)]$; and $x$ is the output color space value 104.

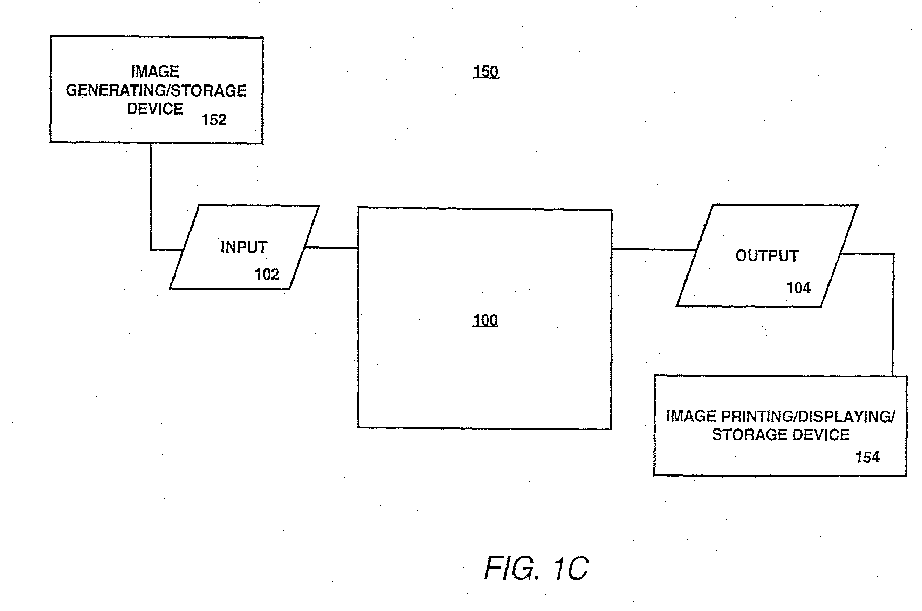

Figure 1C is a block diagram of a system 150 according to an embodiment of the invention. In the system 150, the interpolator 100 is configured to convert the input color space value 102 having a plurality of dimensions to the output color space value 104. The output color space value 104 may also include a plurality of dimensions. The term, "dimension" is used to describe an element (e.g., part, sub-set, etc.) of a value. Typically, a dimension may be one of a set of two or more vectors comprising a given value. In addition, each dimension may be comprised of a plurality of positions. Furthermore, each dimension may include a MSP and an LSP. In one embodiment, each dimension corresponds to a different hue or color.

Input and output color space values having a plurality of dimensions may be more typically utilized in image generation, storage, displaying, printing, and the like. In this regard, the system 150 may include an image generating/storage device 152 configured to forward the input color space value 102 to the interpolator 100. The system 150 may also include an image printing/displaying/storage device 154 configured to receive the output color space value 104 from the interpolator 100.

The image generating/storage device 152 may include various devices such as, digital cameras, scanners, computer memory, and the like. A digital camera is an example of the image generating/storage device 152 having both generating and storage capacity. However, the image generating/storage device 152 need not have both generating and storage capacity, but rather, may include one and/or the other and any such variation is within the scope of the claims.

The image printing/displaying/storage device 154 may include various devices such as, computer displays, printers, faxes, computer memory, and the like. Similar to the discussion of the image generating/storage device 152, the image printing/displaying/storage device 154 need not have all of the printing, displaying and storage capacities, but rather, may include one, some and/or all of these capacities and any such variation is within the scope of the claims

To continue, the interpolator 100 is configured to determine the MSP and the LSP for each dimension of the input color space value 102. In a manner similar to the embodiment described hereinabove, the interpolator 100 is further configured to utilize the MSPs and/or the LSPs to determine a value of at least one node. As above, one node based on the values of the MSPs (e.g., the [0] node) will be determined.

If only the [0] node is determined, the output color space value 104 may be found at that node and is thus, equal to the P[0]. If three or more nodes are determined, the second node is termed the [1] node, the third node is termed a [2] node, and so forth. Again, as above, the output color space value 104 may be found bound within the determined nodes. In this regard, similarly to above, the number of nodes determined is dependent upon the value of the LSPs. In a variation of the abovementioned embodiment, if substantially all LSPs have a value of essentially zero, the LSPs do not contribute to the conversion of the input color space value 102 to the output color space value 104. Thus, one node based on the value of the MSPs (e.g., the [0] node) will be determined and utilized to determine the output color space value 104. However, for an input color space value 102 having a plurality of dimensions, it may be more typical that a plurality of nodes are determined.

In this regard, the interpolator 100 is further configured to determine a relative weight for each node value determined. Basically, the value of each LSP is compared to a possible number of distinct LSP values ("nLSP"). Typically, all of the nLSPs will be equivalent, however, it is within the scope of the invention that some or all of the LSPs may have a different nLSP. Additionally, the closer some or all of the LSPs are to the nLSP, the greater the influence (e.g., weight, impact, etc.) the value of one or more non-[0] nodes may have on the output color space value 104. For example, given a two dimensional input color space value 102, such as (*a, b*), where each dimension has a respective MSP (e.g., $a_u$ and $b_u$) and a respective LSP (e.g., $a_l$ and $b_l$), the following nodes may be described:

TABLE 1

| Nodes for a 2 dimensional input value | |
|---|---|
| [0] | $(a_u, b_u)$ |
| [1] | $(a_u, b_u + 1)$ |
| [2] | $(a_u + 1, b_u)$ |
| [3] | $(a_u + 1, b_u + 1)$ |

As shown in Table 1, four nodes may be described for a two dimensional input color space value 102. However, according to an embodiment of the invention, three or less nodes may need be determined to derive the output color space value 104. According to this embodiment, determination of the three or less contributing nodes may be based upon a ratio of each LSP (e.g., $a_l$ and $b_l$) to the nLSP. Although a variety of methods may be utilized to perform this concept, a method of pruning out non-contributing nodes (e.g., determining contributing nodes) according to an embodiment of the invention may include the following steps:

For counter *i* from 0 to the maxLSP;

at each counter value, compare each LSP to *i*;

for each respective LSP greater than *i*, the contributing node includes a corresponding dimension of MSP+1; and

for each respective LSP less than or equal to *i*, the contributing node includes a corresponding dimension of MSP.

In this manner, each node contributing to the output color space value 104 may be determined. Furthermore, it may be shown that based on the abovementioned steps, for a given set of LSPs, the P[1] and P[2] may not both contribute to the output color space value 104. This is because, for a given set of LSPs, statements: $a_l \leq i, b_l > i$; and $a_l > i, b_l \leq i$ may not both be true for any reasonable values of *i*. This is the case because the approach is based on tetrahedral interpolation, which in 2 dimensions is a triangle. Thus the cases are the output equals P[0], or somewhere along the line between P[0] and P[1] or P[2] or P[3], somewhere inside the triangle P[0]->P[1]->P[3], or somewhere inside the triangle P[0]->P[2]->P[3]. This fact is exploited to prune the LUT 112 accesses.

In addition to determining a sub-set of nodes contributing to the output color space value 104, the output color space value 104 may be determined by the interpolator 100 by performing the following steps:

For counter *i* from 0 to the maxLSP;

at each counter value, compare each LSP to *i*;

for each respective LSP greater than *i*, the contributing node includes a corresponding dimension of MSP+1;

for each respective LSP less than or equal to *i*, the contributing node includes a corresponding dimension of MSP;

determine a lookup value for the contributing node;

maintain a running total value for the determined contributing nodes; and

determine the output color space value 104 by calculating an average contributing node value (e.g., total value divided by the nLSP).

In this manner, the output color space value 104 may be determined based on the weighted average of each determined node value. In this regard, the interpolator 100 may be further configured to determine each node value. Similarly to above, in an embodiment of the invention, node values may be retrieved from the LUT 112 based on the MSPs and or LSPs of the input color space value 102. The LUT 112 may include an indexed list of entries. Each entry may include a query value and an answer value. Each query value may correspond to the respective MSPs of a sub-set of input values (e.g., nodes). Each answer value may correspond to the respective output value (e.g., node value).

Furthermore, it should be noted that the counter i directly affects the resolution of output color space value 104 by dictating the number of iterations performed. For a given maxLSP, the number oflookup operations performed and/or averaging operations performed may be modified by modifying the manner in which the counter i steps from 0 to maxLSP. For example, the number of lookup operations and arithmetic computations may be reduced by modifying the first line of the above mentioned steps to read, "For counter *i* from 0 to maxLSP step 2". In this manner, the print speed may be increased.

While a variety of equations may be utilized to derive the output color space value 104 based on the input color space value 102 having n dimensions, according to an embodiment of the invention, the following equation may be used:

$$x = \mathrm{AVE}(P[a_u + (a_l > i)][b_u + (b_l > i)][c_u + (c_l > i)]\ldots) \text{ for } i = 0 \text{ to } k^n\text{-}1 \qquad \text{eqn. 2}$$

where: one or more of $a, b, c,$ and ... are the $n$ dimensions of the input color space value 102; one or more of $a_u$, $b_u$, $c_u$, and ... are the respective MSPs of the $n$ dimensions of the input color space value 102; one or more of $a_l$, $b_l$, $c_l$, and ... are the respective LSPs of the $n$ dimensions of the input color space value 102; $p$ is a quantity of positions associated with one or more of $a_l$, $b_l$, $c_l$, and ...; $P[a_u+(a_l>i)][b_u+(b_l>i)][c_u+(c_l>i)]\ldots$ is a lookup value of $[a_u+(a_l>i)][b_u+(b_l>i)][c_u+(c_l>i)]\ldots$; and $x$ is the output color space value 104. Moreover, the output color space value 104 may include a plurality of dimensions.

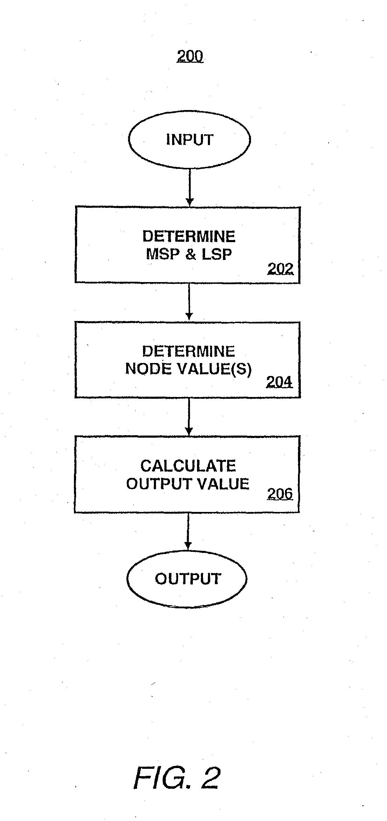

Figure 2 is a flow diagram of a method 200 according to an embodiment of the invention for converting the input color space value 102 of one color space to the output color space value 104 of a second color space. The following description of the method 200 will be made with particular reference to the interpolator 100 described in figures 1A - 1C. Accordingly, the method 200 may be initiated in response to receiving the input color space value 102 from the image generating/storage device 152. While the input color space value 102 may be any reasonable numerical value and the input color space value 102 may have one or more dimensions, for the purpose of presenting a relatively simple example, the input color space value 102 is a single dimension having an eight bit, binary number.

At step 202, the MSP and the LSP may be determined for the input color space value 102. For example, the MSP may be predetermined to be the four, left-most bits of the input color space value 102. Similarly, the LSP may be predetermined to be the remaining four, right-most bits of the input color space value 102, for example. In this manner, the MSP and the LSP for the input color space value 102 may be determined by the interpolator 100 at step 202.

In one embodiment, steps 204-206 are performed such that the output color space value 104 is calculated based on a weighted node value. In this case, the value of the LSP is compared to a number of distinct LSP values ("nLSP"). For example, the nLSP may be essentially equal to 16 because there are 16 distinct values from 0000 to 1111 in a four bit binary number. Additionally, in this relatively simplified example in which the input color space value 102 has only one dimension, there may only be two possible nodes (e.g., [0] and [1]). In this regard, the [0], represents the lowest reasonable value of the input color space value 102 for a given MSP and thus, the P[0] represents one extreme value of the output color space value 104. Similarly, the [1], represents an upper limit of reasonable values of the input color space value 102 for a given MSP and thus, the P[1] represents another extreme value of the output color space value 104. More particularly, the [1] represents a node found at the MSP + 1 position.

At step 204, at least one node value may be determined. In the case in which the output color space value 104 is calculated based on a weighted node value, the LSP is compared to the counter $i$ and if the LSP is greater than the counter $i$, a lookup value for the MSP+1 (e.g., P[1]) is retrieved from the LUT 112. Conversely, if the LSP is less than or equal to the counter $i$, a lookup value for the MSP (e.g., P[0]) is retrieved from the LUT 112. The node value may be set, substantially, equal to the lookup value retrieved. Additionally, this process may be performed for substantially each value of the counter $i$. In this manner, the contributing nodes, their respective values, and their respective weights may be determined.

At step 206, the output color space value 104 may be calculated. In an embodiment of the invention, the output color space value 104 may be calculated based on the node value(s) determined at step 204. For example, an average node value may be determined by calculating a sum of the node value(s) determined at step 204 and dividing this sum by the number of node value(s) determined at step 204 (e.g., nLSP).

Furthermore, although steps 204 and 206 are depicted as separate steps in figure 2, in another embodiment of the invention, the steps 204 and 206 may be performed essentially simultaneously. For example, generally, the ratio of the LSP to the nLSP determines the weight of the node value(s) used to determine the output color space value 104. As this ratio may be determined in a variety of mathematically equivalent manners, any such equivalent manner is within the scope of the claims. By way of a specific example, the weight of the P[0] is substantially equal to one minus the product of the LSP divided by the nLSP. The weight of the P[1] is substantially equal to the LSP divided by the nLSP. Thus, if the LSP is 7 (e.g., 0111 in binary) and the nLSP is 16, for example, then the output color space value 104 may be calculated, by the interpolator 100, to equal to:

$$9/16P[0] + 7/16P[1]$$

Following the step 206, the output color space value 104 may be forwarded to the image printing/displaying/storage device 154 and the method 200 may end or idle until another input color space value 102 is received.

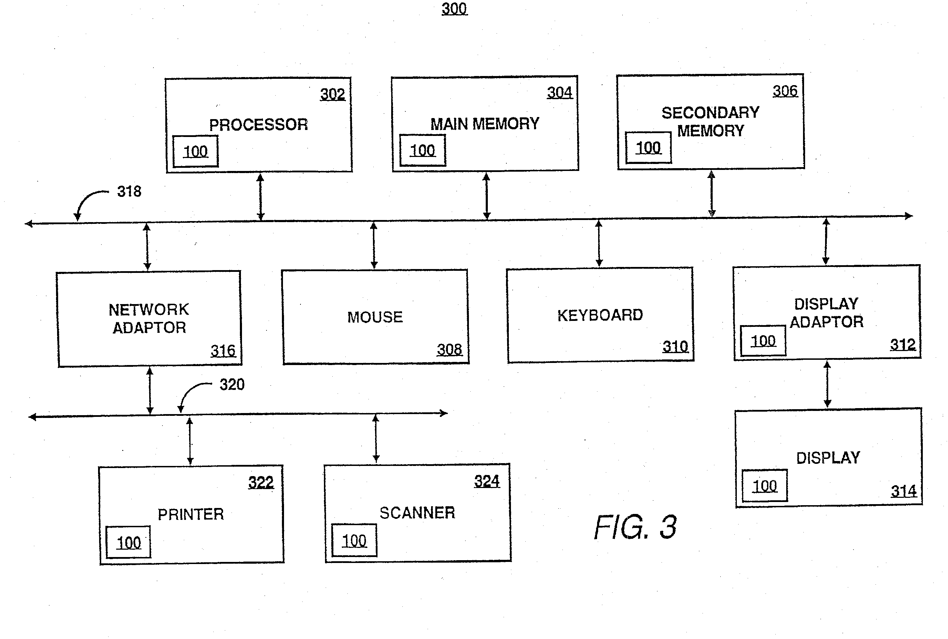

Figure 3 is a block diagram of a system 300 in which another embodiment of the invention may be implemented. As shown in figure 3, the system 300 includes a processor 302, a main memory 304, a secondary memory 306, a mouse 308, a keyboard 310, a display adapter 312, a display 314, a network adapter 316, and a bus 318. The bus 318 is configured to provide a communication path for each element of the system 300 to communicate with the other elements. The network adapter 316 is configured to provide a communication path between the bus 318 and a network 320. The network 320 may include any reasonable number of dimensions including a printer 322, a scanner 324, and the like.

The processor 302 is configured to execute a software embodiment of the interpolator 100. In this regard, a copy of computer executable code for the interpolator 100 may be loaded in the main memory 304 for execution by the processor 302 from the secondary memory 306. In addition to computer executable code, the main memory 304 and/or the secondary memory may store the LUT 112, image files, and the like.

In operation, based on the computer executable code for an embodiment of the interpolator 100, the processor 302 may generate display data. This display data may be received by the display adapter 312 and converted into display commands configured to control the display 314. Similarly, based on the computer executable code for another embodiment of the interpolator 100, the processor 302 may generate print commands for producing image content on the printer 322. In addition, based on the computer executable code for yet another embodiment of the interpolator 100, the processor 302 may receive, convert, store, etc. image files from the scanner 324 and the like. Furthermore, in a well known manner, the mouse 308 and keyboard 310 may be utilized by a user to interface with the system 300.

The printer 322 is configured to execute various software embodiments of the interpolator 100. In this regard, although not shown in figure 3, the printer 322 may include computer memory configure to store a copy of computer executable code for the interpolator 100. In addition, although not shown in figure 2, the printer 322 may include a processor (e.g., an application specific integrated circuit "ASIC") configured to execute various software and/or hardware embodiments of the interpolator 100. Furthermore, the printer 322 may be configured to store the LUT 112, image files, and the like.

The scanner 324 is configured to execute various software embodiments of the interpolator 100. In this regard, although not shown in figure 3, the scanner 324 may include computer memory configure to store a copy of computer executable code for the interpolator 100. In addition, although not shown in figure 2, the scanner 324 may include a processor (e.g., ASIC) configured to execute various software and/or hardware embodiments of the interpolator 100. Furthermore, the scanner 324 may be configured to store the LUT 112, image files, and the like. Moreover, although not shown in figure 3, other image capturing devices (e.g., digital camera, etc.) may, according to various other embodiments of the invention, include the interpolator 100 and are thus, within the scope of the claims.

The display adapter 312 and/or the display 314, may be configured to execute various software embodiments of the interpolator 100. In this regard, although not shown in figure 3, the display adapter 312 and/or the display 314 may include computer memory configure to store a copy of computer executable code for the interpolator 100. In addition, although not shown in figure 2, the display adapter 312 and/or the display 314 may include a processor (e. g., ASIC) configured to execute various software and/or hardware embodiments of the interpolator 100. Furthermore, the display adapter 312 and/or the display 314 may be configured to store the LUT 112, image files, and the like.

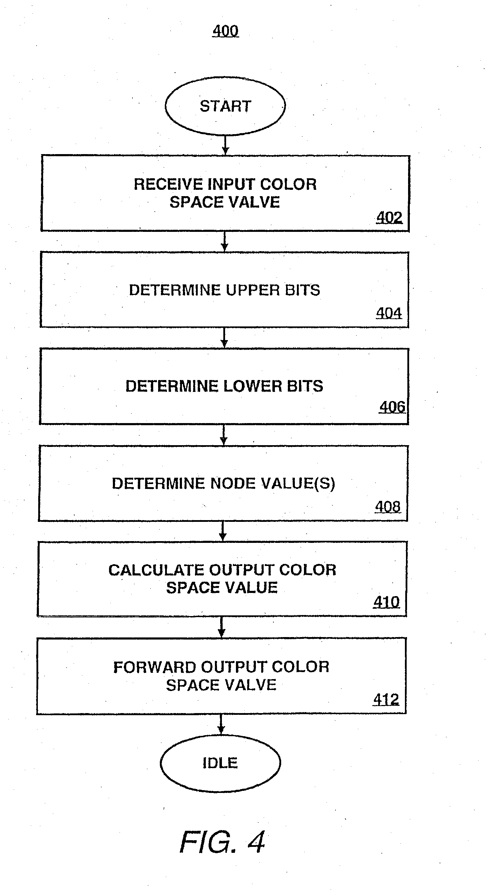

Figure 4 is a flow diagram of a method 400 for converting the input color space value 102 to the output color space value 104 according to another embodiment ofthe invention. In this embodiment; the input color space value 102 may represent a color in one color space, for example, the RGB color space and thus, may include red, green, and blue dimensions. The output color space value 104 may represent substantially the same color in another color space, for example, the CMY color space and thus, may include cyan, magenta, and yellow dimensions. In addition, each dimension has a value associated with it.

This dimension value denotes a degree to which the dimension is present. For example, in a 24 bit RGB color space, each dimension has an 8 bit value associated with it. Thus, for example, if a minimum amount of the red dimension is present in a color space value, the red dimension value may be "00000000" (0 in decimal). Conversely, if a maximum amount of the red dimension is present, the red dimension value may be "11111111" (255 in decimal).

As shown in figure 4, the method 400 is initiated in response to receiving the input color space value 102 at step 402.

At step 404, the MSP may be determined for each dimension of the input color space value 102 by the interpolator 100. For example, if the MSP is predetermined to be the top (e.g., first) four bits, the interpolator 100 may be configured to extract the first four bits of each dimension. These MSPs are typically termed the "upper bits" and, in RGB color space, they may be represented by "$R_u$", "$G_u$"; and "$B_u$" respectively.

At step 406, the LSP may be determined for each dimension of the input color space value 102 by the interpolator 100. The LSP may be predetermined to be the bottom (e.g., last) four bits. The LSP may be determined for each color dimension. These LSPs are typically termed the "lower bits" and, in RGB color space, they may be represented by "$R_l$", "$G_l$", and "$B_l$" respectively. Additionally, steps 404 and 406 may be performed in the opposite order or at the same time.

At step 408, one or more node values may be determined by the interpolator 100. For example, as described hereinabove, the P[0] may be determined utilizing the upper bits (e.g., MSPs). The P[0] is the respective value of a minimum input color space value for a given set of upper bits. As shown in the following Table 2, in a three dimensional color space, such as RGB, there are eight possible node values for all reasonable lower bit values.

TABLE 2

| Nodes in RGB color space | |
|---|---|
| P[0] | $(R_u, G_u, B_u)$ |
| P[1] | $(R_u, G_u, B_u + 1)$ |
| P[2] | $(R_u, G_u + 1, B_u)$ |
| P[3] | $(R_u, G_u + 1, B_u + 1)$ |
| P[4] | $(R_u, + 1, G_u, B_u,)$ |
| P[5] | $(R_u+1,G_u, B_u+1)$ |
| P[6] | $(R_u+1, G_u+1, B_u)$ |
| P[7] | $(R_u+1, G_u+1, B_u+1)$ |

However, as above, for a given set of lower bits, only a subset of node values are utilized to determine the output color space value 104. Therefore, in a manner similar to that described hereinabove, the node values contributing to the output color space value 104 in this tetrahedral interpolation are determined. For example, using the equation:

$$\sum_{i=0}^{2^n-1} P[R_u + (R_l > i)][G_u + (G_l > i)][B_u + (B_l > i)] \qquad \text{eqn. 3}$$

where: (R,G,B) is the input color space value 102; $R_u$, $G_u$, and $B_u$ are the respective upper bits; $R_l$, $G_l$, and $B_l$ are the respective lower bits; n is the number of bits associated with the lower bits; the function $(A_l > i)$ where $A_l$ is any lower bit and the function is equal to 1 if true and 0 if false; and the function $P[R_u + (R_l > i)][G_u + (G_l > i)][B_u + (B_l > i)]$ is a lookup value of $[R_u + (R_l > i)][G_u + (G_l > i)][B_u + (B_l > i)]$ the interpolator 100 may determine and summate the node values contributing to the output color space value 104. It should be noted that utilizing equation 3, a maximum of 4 and a minimum of 1 unique lookup operations may be performed given a three dimensional input color space value. Again, this is due to the invention being based on tetrahedral interpolation. Thus, the output color space value 104 is computed using the 4 (or fewer) points of the tetrahedra in which the output color space value 104 is contained. Fewer than 4 points may occur, if the output color space value 104 is either along one of the axis's of the tetrahedra or on one of the bounding points of the tetrahedra. In this regard, it is generally known that fewer accesses may result in a reduction of computation time.

At step 410, the output color space value 104 may be calculated by the interpolator 100. For example, an average value of the node values determined at step 408 may be calculated at step 410 by the interpolator 100 using the following equation:

$$(C,M,Y) = \frac{\sum_{i=0}^{2^n-1} P[R_u + (R_l > i)][G_u + (G_l > i)][B_u + (B_l > i)]}{2^n} \qquad \text{eqn. 4}$$

where: (C,M,Y) is the output color space value 104. Utilizing equation 4, the division operation to determine the average node value is performed once. In this manner, the number of rounding operations may be reduced. Thus, tending to increase the accuracy of the solution. Also, various embodiments of the invention may utilize the associative property of the sum operation to perform the additions in any order as well as concurrently.

Alternatively, the steps 408 and 410 may be performed as a single step. For example, using the equation:

$$(C,M,Y) = AVE(P[R_u + (R_l > i)][G_u + (G_l > i)][B_u + (B_l > i)]) \text{ for } i \text{ from 0 to } 2^n\text{-1}, \qquad \text{eqn. 5}$$

may be performed by the interpolator 100.

At step 412, the output color space value 104 may be forwarded. For example, the processor 302 may forward the output color space value 104 to the printer 322. In this manner, an RGB image may be printed on a CMYK printer. Following step 412, the method 400 may end or enter an idle state until another input color space value 102 is received.

The interpolator 100, the method 200 and 400 may exist in a variety of forms both active and inactive. For example, they may exist as software program(s) comprised of program instructions in source code, object code, executable code or other formats. Any of the above may be embodied on a computer readable medium, which include storage devices and signals, in compressed or uncompressed form. Examples of computer readable storage devices include conventional computer system RAM (random access memory), ROM (read only memory), EPROM (erasable, programmable ROM), EEPROM (electrically erasable, programmable ROM), flash memory, and magnetic or optical disks or tapes. Examples of computer readable signals, whether modulated using a carrier or not, are signals that a computer system hosting or running the computer program may be configured to access, including signals downloaded through the Internet or other networks. Concrete examples of the foregoing include distribution of the program(s) on a CD ROM or via Internet download. In a sense, the Internet itself, as an abstract entity, is a computer readable medium. The same is true of computer networks in general. Also this tetrahedral interpolation approach may be implemented in hardware including ASIC, custom accelerator logic, programmable logic (e.g. FPGA), etc.

The disclosures in United States patent application No. 10/230,422, from which this application claims priority, and in the abstract accompanying this application are incorporated herein by reference.

## Claims

**1.** A method of converting an input color space value (102) to an output color space value (104), including the steps of:

determining (202) a most significant portion and a least significant portion associated with said input color space value (102);
determining (204) at least one node value, each node value being determined (204) at a respective counter *i* (122) from 0 to a maximum value associated with said least significant portion, wherein each node value is substantially equal to:

a lookup value associated with one plus said most significant portion for each counter *i* (122) being less than said least significant portion; and
a lookup value associated with said most significant portion for each counter *i* (122) being greater than or equal to said least significant portion; and calculating (206) said output color space value (104) being substantially equal to an average value for said at least one node value.

**2.** A method according to claim 1, wherein said input color space value (102) includes a plurality of color dimensions and said method includes the step of determining (202) a respective most significant portion and least significant portion for each of said plurality of color dimensions.

**3.** A method of converting an input color space value (102) to an output color space value (104), including the step of:

calculating (206) said output color space value (104) based on said input color space value (102) with an equation:

$$x = AVE(P[a_u + (a_l > i)]) \text{ for } i = 0 \text{ to } k^n\text{-1}$$

wherein:

$a$ is said input color space value (102);
$a_u$ is an upper portion of said input color space value (102);

$a_l$ is a lower portion of said input color space value (102);
$k$ is a base unit of a numeral system;
$n$ is a quantity of positions associated with *al;*
*(al > i)* is a function returning a value of 1 if true and 0 if false;
$P[a_u + (a_l > i)]$ is a lookup value of $[a_u + (a_l > i)]$; and
$x$ is said output color space value (104).

**4.** A method of converting an input color space value (102) to an output color space value (104), said input color space value (102) having a most significant portion and a least significant portion, said output color space value (104) having a plurality of bounding values, said method including the steps of:

determining (204) said plurality of bounding values in a lookup table based on said most significant portion and whether said least significant portion is greater than i (122) for each instance of *i* (122) from zero to ($2^n$ - 1), wherein *n* is a number of binary digits associated with said least significant portion; and
calculating (206) said output color space value (104) based on an average of said plurality of bounding values.

**5.** A computer readable medium on which is embedded computer software, said software comprising executable code for performing a method (200) of converting an input color space value (102) to an output color space value (104)according to any one of claims 1 to 4.

**6.** Apparatus for converting an input color space value (102) to an output color space value (104), including:

means for determining (202) a most significant portion and a least significant portion associated with said input color space value (102);
means for determining (204) at least one node value, each node value being determined (204) at a respective counter *i* (122) from 0 to a maximum value associated with said least significant portion, wherein each node value is substantially equal to:

a lookup value associated with one plus said most significant portion for each counter *i* (122) being less than said least significant portion; and
a lookup value associated with said most significant portion for each counter *i* (122) being greater than or equal to said least significant portion; and

means for calculating (206) said output color space value (104) being substantially equal to an average value for said at least one node value.

**7.** Apparatus for converting an input color space value (102) to an output color space value (104), said input color space value (102) having a most significant portion and a least significant portion, said output color space value (104) having a plurality of bounding values, said apparatus including:

means for determining (204) said plurality of bounding values in a lookup table based on said most significant portion and whether said least significant portion is greater than *i* (122) for each instance of *i* (122) from zero to ($2^n$ - 1), wherein *n* is a number of binary digits associated with said least significant portion; and
means for calculating (206) said output color space value (104) based on an average of said plurality of bounding values.

**8.** Apparatus for converting an input color space value (102) to an output color space value (104), including:

means for receiving (106) said input color space value (102);
means for retrieving (126) at least one lookup value from a plurality of lookup values; and
means for calculating (206) said output color space value (104) functionally connected to said means for receiving (106) and said means for retrieving (126), wherein said means for calculating (206) is configured to calculate said output color space value (104) based on said input color space value (102) and said at least one lookup value with an equation:

$$x = AVE(P[a_u + (a_l > i)]) \text{ for } i = 0 \text{ to } k^n-1$$

wherein:

$a$ is said input value (102);
$a_u$ being an upper portion of said input color space value (102);
$a_l$ being a lower portion of said input color space value (102);
$k$ is a base unit of a numeral system;
$n$ being a number of bits associated with $a_l$;
$P[a_u + (a_l > i)]$ being a lookup value of $[a_u + (a_l > i)]$, wherein said lookup value is one of said plurality of lookup values; and
$x$ being said output color space value (104).

**9.** Apparatus for converting an input color space value (102) to an output color space value (104), including:

an MSP/LSP extraction unit (108), configured to determine (202) a most significant portion and a least significant portion associated with said input color space value (102);
a node determination unit (110), functionally attached to said MSP/LSP extraction unit (108) and being configured to determine at least one node value, each node value being determined (204) at a respective counter *i* (122) from 0 to a maximum value associated with said least significant portion, wherein each node value is substantially equal to:

a lookup value associated with one plus said most significant portion for each counter *i* (122) being less than said least significant portion; and
a lookup value associated with said most significant portion for each counter *i* (122) being greater than or equal to said least significant portion; and

an output calculation unit (114), functionally attached to said node determination unit (110) and being configured to calculate said output color space value (104) as being substantially equal to an average value for said at least one node value.

**10.** Apparatus according to claim 9, including a lookup table (112), provided with an indexed list of entries, each entry including a query value and a corresponding node value, each query value being associated with a most significant portion, said lookup table (112) being functionally attached to said node determination unit (110), wherein said node determination unit (110) is configured to receive a corresponding node value in response to querying said lookup table (112).

OUTPUT
104
100
OUTPUT PORT
116
OUTPUT CALCULATION UNIT
114
MSP/LSP EXTRACTION UNIT
108
NODE DETERMINATION UNIT
110
INPUT PORT
106
LUT
112
INPUT
102

FIG. 1A

110
A
B
C
D
MSP STORAGE
118
LSP STORAGE
120
COUNTER
122
COMPARISON UNIT
124
LOOKUP RETRIEVAL UNIT
126

FIG. 1B

150
IMAGE GENERATING/STORAGE DEVICE 152
INPUT 102
100
OUTPUT 104
IMAGE PRINTING/DISPLAYING/ STORAGE DEVICE 154

FIG. 1C

200
INPUT
DETERMINE
MSP & LSP
202
DETERMINE
NODE VALUE(S)
204
CALCULATE
OUTPUT VALUE
206
OUTPUT

*FIG. 2*

300
PROCESSOR
302
100
MAIN MEMORY
304
100
SECONDARY MEMORY
306
100
MOUSE
308
KEYBOARD
310
DISPLAY ADAPTOR
312
100
DISPLAY
314
100
NETWORK ADAPTOR
316
318
320
PRINTER
322
100
SCANNER
324
100

FIG. 3

400
START
RECEIVE INPUT COLOR SPACE VALVE
402
DETERMINE UPPER BITS
404
DETERMINE LOWER BITS
406
DETERMINE NODE VALUE(S)
408
CALCULATE OUTPUT COLOR SPACE VALUE
410
FORWARD OUTPUT COLOR SPACE VALVE
412
IDLE

FIG. 4